# EUROPEAN PATENT APPLICATION

(11) **EP 1 685 922 A1**
(43) Date of publication of application: **02.08.2006**
(21) Application number: 06000391.0
(22) Date of filing: 10.01.2006
(51) Int. Cl.: B23K 35/00, B23K 3/02, C21D 9/00

(54) **Soldering tip with wear- and corrosion resistant coating containing dispersed hard particles**

(30) Priority: 01.02.2005 US 46855
(71) Applicant: Pace, Incorporated, Annapolis Junction, Maryland 20701 (US)
(72) Inventor: Dunham, Paul Alan, Milton Keynes Bucks MK 15 9 JD (GB); Ozpaker, Haldun Tahir, Kensington, Maryland 20895 (US); Snell, Jeffery, Columbia, Maryland 21045 (US); Mc Call, Patrick Richard, Abindgon, Maryland 21009 (US)
(74) Representative: Tomerius, Isabel

(57) **Abstract**

A soldering tip for soldering irons having a mounting portion adapted to fit in a heater unit of a soldering iron or tip-heater cartridge and a soldering portion shaped for forming of a solder joint. At least the soldering portion is formed of a copper inner base material which is covered by a wear and corrosion resistant coating having a matrix of a metal that is harder than the copper inner base material in which (µm micron) size particles of a chemically inert material that is harder than iron are dispersed. The chemically inert material is preferably diamond, but can be ruby, sapphire, silicon, or alumina. The matrix material is preferably iron but can be formed of nickel, nickel alloys, nickel/phosphorous alloys. silver, silver alloys, gold, or gold alloys. Preferably, the coating forms a textured outer surface on the soldering tip.

## Description

### Background of the Invention

### Field of the Invention

The present invention is directed to replaceable soldering tips of the type in hand-held soldering devices, particularly those which are used in producing solder used for mounting electrical components on electrical circuit boards.

### Description of Related Art

Up to now, generally speaking, all soldering tips have been made basically made the same way. A piece of copper is machined to the desired geometry, then it is plated with iron. Iron is plated on the tip to protect the copper from the corrosive action of the solder and flux, as well as to compensate for the relative softness of the copper with a hard coating. While solder and flux will also dissolve iron over time, it takes significantly longer for solder and flux to dissolve iron than copper. Even through iron has poor thermal transfer qualities, it is selected as a protective coating over the copper because of its durability and ability to wet with solder. Once the tip has been plated with iron, the working end is masked and the rest of the tip is plated with chrome or nickel/chrome, which will not wet with solder for the purpose of keeping the solder on the working end of the tip.

Until recently, most solders that have been used have been lead/tin eutectic solders. However, the use of lead-free solders is becoming a legislative requirement around the world. Lead-free solders contain in excess of 94 % tin which is much more corrosive than traditional lead/tin eutectic solders. Lead-free solders also require higher temperatures to melt, further exacerbating the corrosive environment. Additionally, because of the poor wetting properties of lead free solders, chemically aggressive fluxes are used with such solders. The combination of the high tin content, higher operating temperatures, and chemically aggressive fluxes dramatically reduces the working life of a soldering tip and results in higher operating costs for soldering operations.

Increasing the iron thickness of the coating on the tips is often thought to be a good solution to the problem, but the amount of additional iron that has to be added to ensure the same working life reduces the ability of the tip to transfer heat so much that it is virtually impossible to solder with these tips. As a result, at best, a compromise must be made between useful life and heat transfer rate, resulting in a tip that does not transfer heat adequately and does not last as long.

Other types of bonding tools, such as those used for thermocompression bonding, an operation which is performed in a different manner and at higher temperatures than soldering with a soldering iron (around 800 °C to 1200 °C vs. around 170 °C to 190 °C for lead solders and around 217 °C to 227 C for lead-free solders) using, for example, a brazing solder, have a need to use coatings on the bonding tool that are more resistant to wear and corrosion due to the higher loads and temperatures to which such tools are subjected. See, e.g., the bonding tools of Sumitomo Electric Industries, Inc which apply a polycrystalline diamond coating to the bonding tool via gaseous phase synthesis and vapor deposition techniques as are described in U.S. Patent Nos. 5,516,027; 5,653,376 and 5,934,542.

### Summary of the Invention

Accordingly, it is a primary object of the present invention to provide a soldering tip with wear-and corrosion resistant coating which will be suitable for soldering tips of the type used on hand-held and machine or robot held soldering irons, and which will have an extended life even in the environment of lead-free soldering with corrosive fluxes.

This object is achieved in accordance with the present invention by hardening the outer surface of the tip's iron plating so that it is able to withstand the chemically and thermally corrosive environment when using lead free solders through the addition of hardening agents to the electroplating solutions used to coated the copper base material of the tip. The hardening agent used in accordance with the invention is µm (micron) size particles of materials that are harder than iron and are chemically inert, such as, but not limited to natural and synthetic types of diamond, ruby, sapphire, silicon, alumina, etc. The additive becomes part of the iron plating matrix as it deposits onto the copper of the soldering tip. A uniform dispersion of the additive is desired, and the final surface may be smooth or rough. However, a slightly textured surface, e.g., a surface quality Rₐ of from 50 µm to 0.10 µm, is beneficial when using lead free solders as it provides more surface area and eases the difficulty in wetting the lead-free solder to the tip.

In accordance with a preferred technique, a solution of at least one metal salt in which µm (micron) size diamond particles are distributed is used to electroplate a protective layer onto the copper base of the soldering tip of at most about 1.5 mm. In particular, in a preferred version, the plated-on tip coating is formed of an iron matrix in which the diamond particles are substantially uniformly distributed.

### Brief Description of the Drawings

Fig. 1 illustrates a soldering iron with a soldering tip in accordance with the present invention.

Fig. 2 is a perspective view of a tip in accordance with the present invention; and

Fig. 3 is an enlarged, schematic, partial section of the tip shown in Fig. 2.

### Detailed Description of the Invention.

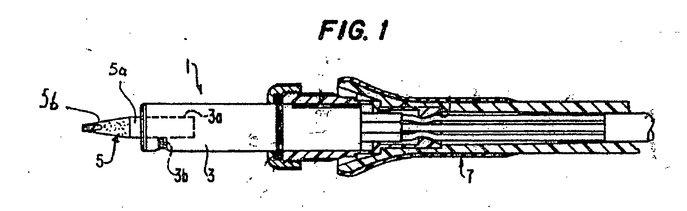

Figure 1 shows a soldering iron 1 with a replaceable soldering tip 5. The soldering iron is of the type disclosed in U.S. Patent No. 5,422,457, which is hereby incorporated by reference to the extent necessary to complete an understanding of this invention. However, the present invention is not limited to tips for use with such a soldering iron and is applicable to any hand-holdable, machine holdable or robot holdable soldering iron; see, e.g., U.S. Patent No. 4,493,449. Furthermore, the coated tip in accordance with the present invention could also be the tip of a tip heater cartridge, whether permanently attached to the heater unit portion of the cartridge as in U.S. Patent No. 6,513,697 or replaceably attached to the heater unit portion of the cartridge as in U.S. Patent No. 6,793,114. Thus, all references herein to a heater unit should be construed as encompassing the heater unit of any of these types of soldering irons, not merely the specific example shown in the drawings and described below.

The soldering iron 1 of Fig. 1 has a heater unit 3 with a tip receptacle 3a and the end of a handle 7. A mounting portion 5a of the soldering tip 5 is inserted in the tip receptacle 3a and is held there, for example, by a set screw 3b.

The soldering tip 5 has a soldering portion 5b that is shaped for forming of a solder joint. In Fig. 1, the tip has soldering portion 5b that is a frustum that has been beveled at opposite sides to be essentially wedge-shaped. However, the shape itself is not novel or itself part of the invention, and the invention can be applied to soldering tips of any size or shape.

However, instead of being formed of a copper core to which an iron coating has been applied, at least the soldering portion 5b of the soldering tip 5 has a copper inner base material to which a wear and corrosion resistant coating has been applied that is comprised of a matrix of a metal that is harder than the copper inner base material, and in which micron size particles of a chemically inert material that is harder than iron are dispersed. The chemically inert material can be any one of diamonds, rubies, sapphires, silicon, and alumina, diamonds being particularly preferred. While the matrix material is preferably iron, it can be nickel, nickel alloys, nickel/phosphorous alloys, silver, silver alloys, gold, or gold alloys.

The preferred manner of forming the coating is by electroplating, e.g., in the manner describing in U.S. Patent No. 3,762,882, which patent is hereby incorporated by reference. However, other techniques can be used, such as gaseous phase synthesis and vapor deposition techniques.

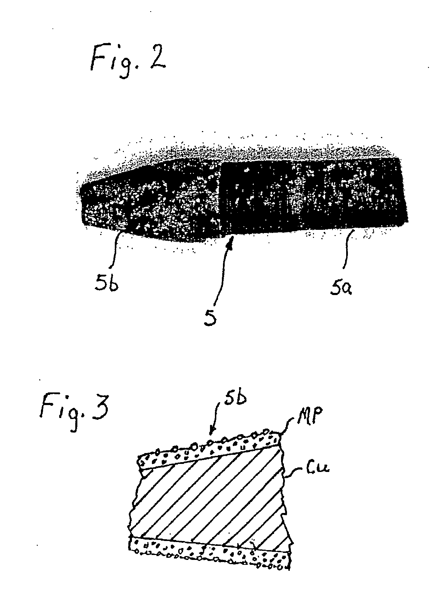

The matrix and particle coating MP (Fig. 3) produced in accordance with the invention preferably has a uniform dispersion of the hardening agent additive. Furthermore, while the final outer surface may be smooth or rough, a slightly textured surface, e.g., having a surface texture Rₐ value of from 50 µm to 0.10 µm, has been found by the inventors to be beneficial when using lead free solders since such texturing provides more surface area and eases the difficulty in wetting the lead-free solder to the tip, as was noted above. In this regard, Rₐ (Average Roughness) is the most common parameter used as an indicator of surface texture in North America. Ra is calculated by an algorithm that measures the average length between the peaks and valleys and the deviation from the mean line on the entire surface within the sampling length. Ra averages all peaks and valleys of the roughness profile and then neutralizes the few outlying points so that the extreme points have no significant impact on the final results. In this context, the tip coating used in accordance with the present invention, preferably, has a thickness of at most about 1.5 mm and the textured outer surface has a surface quality in terms of average roughness Rₐ of from 50 µm to 0.10 µm.

It has been found that soldering tips in accordance with the present invention have a heat-up time that compares favorably with standard iron plated copper tips, yet wear much longer, especially when lead-free solder are used with and without fluxes. In fact, the increased life and performance of composite tips produced in accordance with the present invention is able to offset the higher cost of production of the composite coated tips of the present invention relative to conventional plated iron tips.

It should be appreciated that the present invention is not intended to be limited to the specific characteristics shown and described herein, but rather the invention is intended to encompass other methods, materials and constructions that those skilled in the art will recognize as be at least equivalent to those described herein.

## Claims

1. Soldering tip for soldering irons having a mounting portion adapted to attach to a heater unit of a soldering iron or tip-heater cartridge of a soldering iron and a soldering portion shaped for forming a solder joint, at least the soldering portion comprising:
a copper inner base material, and
a wear and corrosion resistant coating covering and protecting the copper inner base material,
wherein the wear and corrosion resistant coating comprises a matrix of a metal that is harder than the copper inner base material and in which µm (micron) size particles of a chemically inert material that is harder than iron are dispersed, said chemically inert material being a material selected from the group consisting of diamond, ruby, sapphire, silicon, and alumina.

2. Soldering tip according to claim 1, wherein the coating forms a textured out surface on the soldering tip.

3. Soldering tip according to claim 1 or 2, wherein the matrix is formed of iron.

4. Soldering tip according to claim 1 or 2, wherein the matrix is formed of a material selected from the group consisting of nickel, nickel alloys, nickel/phosphorous alloys, silver, silver alloys, gold, and gold alloys.

5. Soldering tip according to any one of claims 1 to 4, wherein the coating has a thickness of at most 1.5 mm.

6. Soldering tip according to claim 3, wherein the textured outer surface has a surface roughness Ra of from 50 µm to 0.1 µm.

7. A soldering iron, comprising:
- a heater unit, and
- a soldering tip having mounting portion adapted to attach to said heater unit and a soldering portion shaped for forming a solder joint, at least the soldering portion comprising:
- a copper inner base material, and
- a wear and corrosion resistant coating covering and protecting the copper inner base material,
wherein the wear and corrosion resistant coating comprises a matrix of a metal that is harder than the copper inner base material and in which µm (micron) size particles of a chemically inert material that is harder than iron are dispersed, said chemically inert material being a material selected from the group consisting of diamond, ruby, sapphire, silicon, and alumina.

8. Soldering iron according to claim 7, wherein the chemically inert material is selected from the group consisting of diamond, ruby, sapphire, silicon, and alumina.

9. Soldering iron according to claim 7 or 8, wherein the coating forms a textured outer surface on the soldering tip.

10. Soldering iron according to any one of claims 7 to 9, wherein the matrix is formed of iron.

11. Soldering iron according to any one of claims 7 to 10, wherein the matrix is formed of a material selected from the group consisting of nickel, nickel alloys, nickel/phosphorous alloys, silver, silver alloys, gold, and gold alloys.

12. Soldering iron according to any one of claims 7 to 11, wherein the coating has a thickness of at most about 1.5 mm.

13. Soldering iron according to claim 9, wherein the textured outer surface of the coating has a surface roughness Rₐ of from 50 µm to 0.10 µm.

14. Soldering iron according to any one of claims 7 to 13, wherein the heater unit is mounted within a hand-holdable hand-piece.

15. Soldering iron according to any one of claims 7 to 14, wherein the heater unit is mounted within a body of a replaceable tip-heater cartridge.
